# EUROPÄISCHE PATENTSCHRIFT

(11) **EP 3 236 121 B1**
(45) Veröffentlichungstag und Bekanntmachung des Hinweises auf die Patenterteilung: **16.09.2020**
(21) Anmeldenummer: 16166392.7
(22) Anmeldetag: 21.04.2016
(51) Int. Cl.: F16K 11/044, F16K 11/052

(54) **WECHSELVENTIL FÜR EINE SICHERHEITSVENTILANORDNUNG UND SICHERHEITSVENTILANORDNUNG**
SHUTTLE VALVE FOR A SAFETY VALVE APPARATUS AND SAFETY VALVE APPARATUS
SELECTEUR DE CIRCUIT POUR UN SYSTEME DE SOUPAPE DE SECURITE ET SYSTEME DE SOUPAPE DE SECURITE

(43) Veröffentlichungstag der Anmeldung: 25.10.2017
(73) Patentinhaber: Leser GmbH & Co. KG, 20537 Hamburg (DE)
(72) Erfinder: Rösler, Jörg, 24534 Neumünster (DE); Boydag, Rasim, 25436 Tornesch (DE); Büchner, Björn, 25365 Klein Offenseth-Sparrieshoop (DE); Lie Indah Wahju, Christopher, 22529 Hamburg (DE)
(74) Vertreter: Patentanwälte Vollmann Hemmer Lindfeld Partnerschaft mbB

(56) Entgegenhaltungen:
- EP-A1- 1 498 647
- WO-A1-2015/030909
- US-A- 2 852 947
- US-A- 3 605 811
- US-A- 4 979 244

## Beschreibung

Die Erfindung betrifft ein Wechselventil für eine Sicherheitsventilanordnung und eine Sicherheitsventilanordnung.

Den Ausgangspunkt der Erfindung bilden solche Sicherheitsventilanordnungen, bei denen ein unter Fluiddruck stehender Raum einer technischen Anlage mit zwei parallel geschalteten Sicherheitsventilen über ein den beiden Sicherheitsventilen vorgeschaltetes Wechselventil in Verbindung steht. Das Wechselventil verfügt hierzu über zwei Fluidauslässe, an denen jeweils eines der beiden Sicherheitsventile angeordnet ist, und verschließt wahlweise einen der beiden Fluidauslässe und somit den Strömungspfad zu einem der beiden Sicherheitsventile. Demzufolge ist nur eines der Sicherheitsventile dazu vorgesehen, in dem druckbeaufschlagten Raum, bei dem es sich z. B. um einen Behälter oder eine Rohrleitung handeln kann, einen unzulässig hohen Druck abzubauen, indem über dieses Sicherheitsventil ein Teil des in dem Raum befindlichen Fluids abgelassen wird, bis in dem Raum wieder ein zulässiger Druck herrscht. Das zweite Sicherheitsventil bildet lediglich eine Redundanz für den Fall eines Defekts des ersten Sicherheitsventils und übernimmt dann nach einer entsprechenden Umschaltung des Wechselventils dessen Funktion. Das Wechselventil erlaubt zudem Wartungs- oder Reparaturarbeiten an dem nicht in Strömungsverbindung mit dem Raum stehenden Sicherheitsventil, wobei die Sicherheit des druckbeaufschlagten Raumes aufgrund des anderen Sicherheitsventils bei voller Verfügbarkeit der technischen Anlage gewährleistet ist.

Zum Stand der Technik gehören solche Wechselventile, an denen die beiden Fluidauslässe an einem Ventilgehäuse einander direkt gegenüberliegend angeordnet sind, wobei ein zwischen den Fluidauslässen angeordneter Absperrkörper derart linear verschoben werden kann, dass er entweder den einen oder den anderen Fluidauslass verschließt. Bei diesen Wechselventilen erweist es sich als problematisch, dass der Strömungspfad, durch die Anordnung der Fluidauslässe an einem Ventilgehäuse, derart gestaltet ist, dass es zu Strömungs- bzw. Druckverlusten in dem Wechselventil führen kann. Diese Strömungs- bzw. Druckverluste können wiederum bewirken, dass das dem nicht verschlossenen Fluidauslass nachgeschaltete Sicherheitsventil bei einem Überdruck in dem zu schützenden Raum möglicherweise nicht mehr die vorgesehene Funktion ordnungsgemäß erfüllt.

Des Weiteren sind solche Wechselventile bekannt, welche einen drehbar gelagerten Absperrkörper aufweisen, welcher mittels eines Drehantriebes derart gedreht werden kann, dass ein durch den Absperrkörper verlaufender Strömungskanal eine Strömungsverbindung des Fluideinlasses mit jeweils einem der beiden Fluidauslässe schafft. In diesen Wechselventilen herrschen bei geeigneter Auslegung in der Regel gute Strömungsbedingungen, allerdings erweist es sich bei diesen Wechselventilen als nachteilig, dass deren Herstellung vor allem wegen der erforderlichen Abdichtung des Absperrkörpers gegenüber dem Ventilgehäuse generell sehr aufwendig und damit kostenintensiv ist. Des Weiteren sind häufig zur Abdichtung weichdichtende Materialien erforderlich, welche die Einsatzbedingungen (Temperatur, Medienbeständigkeit) einschränken.

US 2,852,947 offenbart ein Umschaltventil, welches den Wechsel zwischen zwei Strömungswegen ermöglicht. Dieses Umschaltventil hat ein konvex geformtes Dichtelement, welches zwischen zwei Ventilstizen verschwenkt werden kann. Dazu ist das Ventilelement auf einem schwenkbaren Hebel gelagert, welcher sich aus einem Ventilgehäuse nach außen erstreckt und an seinem dem Ventilelement abgewandten Hebelende über einen Betätigungsmagneten bewegbar ist. Diese Ausgestaltung ist für hohe Drücke nicht geeignet, da die erforderlichen Schaltkräfte durch diese Hebelanordnung nur schwer aufgebracht werden können.

WO 2015/030909 A1 offenbart ein Butterfly-Ventil mit einer beweglichen Ventilklappe, welche ein Umschalten zwischen zwei Strömungswegen ermöglicht. Die Ventilklappe ist in einem Ventilgehäuse um sich seitlich von der Ventilklappe wegerstreckende Zapfen schwenkbar und hat den Nachteil, dass sie zur Abdichtung an Vor- und Rückseite anliegen muss. Dadurch ist nur schwer eine ausreichende Abdichtung für hohe Drücke zu realisieren.

Weiterer relevanter Stand der Technik ist durch US-A-4 979 244, siehe insbesondere die Figuren 2,3, und durch US-A-3 605 811, siehe insbesondere die Figur 4, gegeben.

Vor diesem Hintergrund besteht die Aufgabe der Erfindung darin, ein Wechselventil für eine Sicherheitsanordnung zu schaffen, welches einerseits gute Durchströmeigenschaften sowie einen großen (Temperatur-) Einsatzbereich aufweist und andererseits kostengünstig herstellbar ist. Eine weitere Aufgabe der Erfindung besteht darin, eine im Hinblick auf die genannten Aspekte verbesserte Sicherheitsventilanordnung zu schaffen.

Die erstgenannte Aufgabe wird durch ein Wechselventil mit den in Anspruch 1 genannten Merkmalen gelöst, während zur Lösung der zweitgenannten Aufgabe eine Sicherheitsventilanordnung mit den in Anspruch 14 angegebenen Merkmalen vorgeschlagen wird. Vorteilhafte Weiterbildungen des Wechselventils und der Sicherheitsventilanordnung ergeben sich aus den Unteransprüchen, der nachfolgenden Beschreibung sowie aus der Zeichnung. Hierbei können die in den Unteransprüchen angegebenen Merkmale in der angegebenen Kombination, aber auch, soweit technisch sinnvoll, für sich oder in anderer Kombination zur Ausgestaltung der Erfindung beitragen.

Das erfindungsgemäße Wechselventil ist zum Einsatz in einer Sicherheitsventilanordnung vorgesehen. Es verfügt über ein Ventilgehäuse, welches einen Fluideinlass und zwei Fluidauslässe aufweist, welche jeweils zum Anschluss eines Sicherheitsventils vorgesehen sind. Ferner weist das Wechselventil einen in dem Ventilgehäuse angeordneten beweglichen Absperrkörper auf, welcher zwischen zwei Schließstellungen bewegbar ist, in denen er jeweils einen der Fluidauslässe verschließt.

Die Besonderheit des erfindungsgemäßen Wechselventils besteht darin, dass der Absperrkörper um eine Schwenkachse schwenkbar angeordnet ist und dass das Wechselventil einen Linearantrieb aufweist, welcher mit dem Absperrkörper derart gekoppelt ist, dass der Absperrkörper durch Bewegung des Linearantriebes zwischen seinen Schließstellungen schwenkbar ist. In diesem Zusammenhang ist das Ventilgehäuse des Wechselventiles zweckmäßigerweise so ausgestaltet, dass die Mittelachsen der beiden an dem Ventilgehäuse vorgesehenen Fluidauslässe in der Schwenkebene des Absperrkörpers liegen. Erfindungsgemäß wird somit ein dreh- bzw. schwenkbarer Absperrkörper durch eine lineare Bewegung des Linearantriebs zwischen seinen Schließstellungen bewegt.

Ein Vorteil des in der beschriebenen Weise schwenkbaren Absperrkörpers liegt darin, dass sich in dem Ventilgehäuse ein durch dieses verlaufender Strömungspfad von dem Fluideinlass zu dem jeweils von dem Absperrkörper nicht verschlossenen Fluidauslass bei geeigneter konstruktiver Auslegung des Ventilgehäuses und/oder des Absperrkörpers nur unwesentlich oder vorzugsweise gar nicht gegenüber dem Fluideinlass und dem Fluidauslass verengt, sodass in dem Wechselventil vorzugsweise keine oder allenfalls geringe Druckverluste auftreten. Ein weiterer Vorteil des erfindungsgemäßen Wechselventils besteht darin, dass seine Ausgestaltung weniger kompliziert ist und es damit kostengünstiger zu fertigen ist, als die aus dem Stand der Technik bekannten Wechselventile mit einem in dem Ventilgehäuse drehbar gelagerten und drehend angetriebenen Absperrkörper.

Bei dem Linearantrieb des erfindungsgemäßen Wechselventils handelt es sich vorteilhaft um einen handbetätigten Linearantrieb und insbesondere um einen handbetätigten Spindeltrieb. Zum Verstellen des Absperrkörpers von einer ersten Schließstellung in eine zweite Schließstellung ist somit keine Fremdenergie erforderlich, sodass das Wechselventil auch in einer mit einem Energieausfall verbundenen Notsituation in der geforderten Weise verstellt werden kann. Die vorzugsweise Verwendung eines handbetätigten Spindeltriebs ist insofern vorteilhaft, als Spindeltriebe weitestgehend wartungsfrei sind und eine mechanische Selbsthemmung bewirken, sodass der mit dem Spindeltrieb gekoppelte Absperrkörper zuverlässig in seiner jeweiligen Schließstellung gehalten wird.

Bevorzugt erstreckt sich eine Bewegungsachse des Linearantriebs quer zu der Schwenkachse des Absperrkörpers. In diesem Zusammenhang ist zweckmäßigerweise vorgesehen, dass die Bewegungsachse des Linearantriebes radial beabstandet von der Schwenkachse des Absperrkörpers ist. D. h., dass ein linear bewegbarer Teil des Linearantriebes vorzugsweise in einer Ebene normal zu der Schwenkachse bewegbar ist, wobei die Bewegung des linear bewegbaren Teiles radial außenseitig der Schwenkachse erfolgt.

Erfindungsgemäß ist vorgesehen, dass der Linearantrieb an dem Absperrkörper radial beabstandet zu dessen Schwenkachse angreift. So ist der Absperrkörper unmittelbar mit einem linear bewegbaren Teil des Linearantriebes bewegungsgekoppelt, wobei der linear bewegbare Teil mit dem Absperrkörper in einem Bereich in Verbindung steht, welcher von der Schwenkachse des Absperrkörpers radial entfernt ist, um ein zum Schwenken des Absperrkörpers erforderliches Moment erzeugen zu können.

Der Absperrkörper weist zwei einander abgewandte Dichtflächen auf, wobei an jedem der Fluidauslässe in dem Ventilgehäuse jeweils ein korrespondierender Ventilsitz ausgebildet ist. Die Ventilsitze sind dabei derart ausgebildet, dass jeweils eine der Dichtflächen in einer der Schließstellungen mit einem der Ventilsitze in dichter Anlage ist. D. h., eine erste Dichtfläche kann an einem ersten Ventilsitz und eine zweite Dichtfläche an einem zweiten Ventilsitz zur Anlage kommen, wobei dies nur abwechselnd geschehen kann, so dass stets ein Ventilsitz verschlossen und der andere geöffnet ist. Hierbei sind die Dichtflächen sinnvollerweise an zwei in der Schwenkebene des Absperrkörpers voneinander abgewandten Seiten des Absperrkörpers angeordnet, wobei die Dichtflächen des Absperrkörpers und/oder die an den zwei Fluidauslässen ausgebildeten Ventilsitze derart ausgebildet und ausgerichtet sind, dass der Absperrkörper in seinen beiden Schließstellungen den jeweiligen Fluidauslass vollständig abdichtet. In diesem Zusammenhang ist es von Vorteil, wenn ein Außenrand der Dichtfläche konisch angefast ist, wobei der Absperrkörper in einen an dem Fluidauslass korrespondierend angefasten Bereich eingreift, welcher den Ventilsitz bildet.

Die Dichtflächen und die Ventilsitze sind vorzugsweise derart ausgebildet, dass zwischen der Dichtfläche und dem zugehörigen Ventilsitz eine rein metallische Dichtpaarung oder eine metallisch-weichdichtende Dichtpaarung gegeben ist. Die dichtend in Anlage kommenden Bereiche der Dichtflächen und der Ventilsitze können so wahlweise metallisch oder weichdichtend je nach Anwendungsfall ausgeführt werden. So können sich beispielsweise folgende Dichtpaarungen ergeben:
1. metallische Dichtung bzw. Anlagefläche an der Dichtfläche und metallischer Ventilsitz
2. metallische Dichtfläche bzw. Anlagefläche an der Dichtfläche und weichdichtender Ventilsitz
3. weichdichtende Anlagefläche an der Dichtfläche und metallischer Ventilsitz

Dabei ist die Anlagefläche der Dichtfläche derjenige Bereich, welcher tatsächlich mit dem Ventilsitz zur Anlage kommt.

Der Linearantrieb greift günstigerweise an einer der Dichtflächen, vorzugsweise in deren Zentrum, an. Das heißt der Linearantrieb greift im Zentrum einer Fläche an, welche von dem Anlagebereich bzw. der Anlagefläche der Dichtfläche aufgespannt wird. Dabei ist der Anlagebereich bzw. die Anlagefläche derjenige Teil der Dichtfläche, welcher mit dem Ventilsitz in dichtende Anlage tritt. Dementsprechend ist ein linear beweglicher Teil des Linearantriebes an einer der beiden Dichtflächen des Absperrkörpers mit dem Absperrkörper bewegungsgekoppelt. Erfolgt diese Bewegungskopplung, wie es bevorzugt vorgesehen ist, an der Dichtfläche mittig, hat dies den Vorteil, dass hierdurch der von dem Linearantrieb erzeugte Anpressdruck, mit dem die Dichtflächen gegen den jeweiligen Ventilsitz gedrückt werden, über den gesamten Kontaktbereich von Dichtfläche und Ventilsitz weitestgehend gleich ist.

Die Schwenkachse, um welche der Absperrkörper in seine Schließstellungen verschwenkt wird, ist außerhalb der Dichtflächen gelegen. Hierbei ist es besonders nützlich, wenn die Schwenkachse außenseitig des gesamten Absperrkörpers angeordnet ist, sodass der Absperrkörper als Ganzes in seine beiden Schließstellungen verschwenkt werden kann.

Ferner ist die Schwenkachse des Absperrkörpers bevorzugt in dem Ventilgehäuse des Wechselventiles außerhalb der Strömungspfade von dem Fluideinlass zu den Fluidauslässen angeordnet. Dementsprechend ist die Schwenkachse vorzugsweise in einem Teil des Ventilgehäuses platziert, welcher abseits der Bereiche liegt, die von einem Fluid auf dessen Weg von dem Fluideinlass zu einem der Fluidauslässe durchströmt werden.

Gemäß einer weiteren vorteilhaften Ausgestaltung des erfindungsgemäßen Wechselventils ist der Absperrkörper über einen außenseitig an dem Absperrkörper angeordneten Schwenkarm an der Schwenkachse angelenkt. Demzufolge ist der Absperrkörper vorzugsweise um eine von dem Absperrkörper beabstandete Schwenkachse schwenkbar, wobei der Schwenkarm den Abstand zwischen Schwenkachse und Absperrkörper schafft. Der Schwenkarm ist hierbei vorteilhafterweise an einer Umfangswandung des Absperrkörpers angeordnet, welche die beiden Dichtflächen des Absperrkörpers miteinander verbindet. Durch die Beabstandung der Schwenkachse von dem Absperrkörper wird ein größerer Bewegungsbereich zwischen den Schließstellungen realisiert, wodurch im Querschnitt größere und optimierte Strömungswege möglich werden.

Weiter bevorzugt ist der Sperrkörper beweglich und insbesondere gelenkig mit dem Schwenkarm verbunden. Dies ermöglicht es, dass der Absperrkörper sich stets parallel zu dem Ventilsitz ausrichten kann, so dass die Dichtfläche des Absperrkörpers gleichmäßig an dem Ventilsitz zur Anlage kommt. Die bewegliche Verbindung zwischen dem Absperrkörper und dem Schwenkarm ist vorzugsweise so ausgebildet, dass sie selbsttätig eine definierte Ruhelage einnimmt, wenn der Absperrkörper sich nicht in einer der Schließstellungen befindet bzw. nicht an einem Ventilsitz in Anlage ist. Dies kann beispielsweise durch eines oder mehrere Federelemente erreicht werden, welche, solange keine externen Kräfte auf den Absperrkörper wirken, diesen in einer definierten Ruhelage halten. Dadurch wird erreicht, dass während des Umschaltvorganges zwischen den beiden Schließstellungen, der Absperrkörper sich nicht aus seiner idealen Dichtstellung herausbewegt.

Die Schwenkachse des Absperrkörpers ist zweckmäßigerweise durch eine im Inneren des Ventilgehäuses gelegene gelenkige Anlenkung des Absperrkörpers definiert. D. h., innerhalb des Ventilgehäuses ist ein Drehgelenk vorgesehen, das im einfachsten Fall ein in dem Ventilgehäuse feststehend angeordnetes und die Schwenkachse bildendes erstes Gelenkglied, wie z. B. einen Gelenkstift aufweist, an welchem ein mit dem Absperrkörper in Verbindung stehendes zweites Gelenkglied drehbar gelagert ist. Die Anordnung der Schwenkachse bzw. der gelenkigen Lagerung des Absperrkörpers im Inneren des Gehäuses macht gedichtete Drehdurchführungen an dem Gehäuse überflüssig.

Weiter vorteilhaft ist vorgesehen, dass der Linearantrieb durch eine Gelenkverbindung mit dem Absperrkörper gekoppelt ist und dass die Gelenkverbindung vorzugsweise so ausgestaltet ist, dass sie zusätzlich eine Relativbewegung zwischen Linearantrieb und Absperrkörper in einer Richtung quer zu der Schwenkachse und quer zu der Bewegungsachse des Linearantriebs zulässt. Diese Ausgestaltung trägt der Tatsache Rechnung, dass sich der Absperrkörper bei seiner Schwenkbewegung relativ zu dem Linearantrieb auch in einer Richtung quer zur Bewegungsachse des Linearantriebes bewegt, wobei die Gelenkverbindung zwischen Linearantrieb und Absperrkörper den Ausgleich eines hierbei zwischen Linearantrieb und Absperrkörper entstehenden linearen Versatzes quer zur Schwenkachse bewirkt.

In bevorzugter Weiterbildung insbesondere der letztgenannten Ausgestaltung, bei welcher der Linearantrieb durch eine Gelenkverbindung mit dem Absperrkörper gekoppelt ist, ist vorzugsweise vorgesehen, dass die Gelenkverbindung einen an dem Linearantrieb angeordneten Gelenkkopf aufweist, welcher in einer Ausnehmung in dem Absperrkörper drehbeweglich und quer zu der Schwenkachse linear beweglich geführt ist. Hierzu ist die an dem Absperrkörper ausgebildete Ausnehmung zum Ausgleich des bei der Schwenkbewegung des Absperrkörpers zwischen dem Linearantrieb und dem Absperrkörper auftretenden Versatzes sinnvollerweise in Richtung quer zu der Schwenkachse des Absperrkörpers deutlich größer als der größte Außenquerschnitt des in der Ausnehmung geführten Gelenkkopfs des Linearantriebs dimensioniert. Der Gelenkkopf kann zum Beispiel als Zylinder oder Kugel ausgebildet sein, welche eine Linearführung, welche sich an dem Absperrkörper quer zu dessen Schwenkachse erstreckt, hintergreifen. D. h., der Gelenkkopf greift beispielsweise in eine Nut ein, welche an ihrer offenen Seite nach innen gerichtete Vorsprünge oder Schultern aufweist, welche von dem Gelenkkopf hintergriffen werden. Die zylindrische oder kugelförmige Gestalt des Gelenkkopfes ermöglicht eine Schwenkbewegung des Gelenkkopfes in der z. B. durch die Nut gebildeten Ausnehmung bzw. Aufnahme in dem Absperrkörper.

Vorzugsweise ist der Gelenkkopf des Linearantriebes durch einen Einsatz in einer Ausnehmung des Absperrkörpers derart formschlüssig gehalten, dass eine Relativbewegung zwischen dem Absperrkörper und dem Gelenkkopf quer zur Bewegungsachse des Linearantriebes möglich ist. Ferner ist gleichzeitig bevorzugt eine Drehbewegung um eine Mittelachse des Gelenkkopfes in der Ausnehmung möglich. Der Einsatz ist bevorzugt so ausgebildet, dass er zur Montage aus der Ausnehmung entnommen werden kann bzw. nach dem Einsetzen des Gelenkkopfes in die Ausnehmung eingesetzt und in dieser, beispielsweise durch Schrauben fixiert wird. So kann der Einsatz den Gelenkkopf hintergreifen, so dass dieser sich nicht aus der Ausnehmung herausbewegen kann. So kann der Gelenkkopf Kräfte in beiden Bewegungsrichtungen des Linearantriebes auf den Absperrkörper übertragen und diesen bewegen.

Gemäß einer weiteren bevorzugten Ausgestaltung des erfindungsgemäßen Wechselventils ist ein linear beweglicher Teil des Linearantriebs durch einen der Fluidauslässe geführt. Dementsprechend greift ein linear beweglicher Teil des Linearantriebs, wie beispielsweise eine linear bewegliche Spindel eines Spindeltriebs, durch einen der zwei Fluidauslässe in das Ventilgehäuse ein, wo dieser Teil des Linearantriebes mit dem Absperrkörper bewegungsgekoppelt ist. Diese Ausgestaltung ist insbesondere dann zweckmäßig, wenn der linear bewegliche Teil des Linearantriebes an einer Dichtfläche des Absperrkörpers angreift. Ferner ist der linearbewegliche Teil des Linearantriebes bevorzugt gedichtet durch eine Gehäusewandung des Gehäuses oder eines sich an dem Auslass anschließenden Leitungsabschnittes geführt.

Neben dem vorab beschriebenen Wechselventil ist auch eine Sicherheitsventilanordnung Gegenstand der Erfindung. Diese Sicherheitsventilanordnung weist ein Wechselventil und zwei ausgangsseitig des Wechselventils angeordnete Sicherheitsventile auf. Die erfindungsgemäße Sicherheitsventilanordnung zeichnet sich dahingehend aus, dass das Wechselventil gemäß der vorangehenden Beschreibung ausgebildet ist, wobei die zwei Sicherheitsventile jeweils mit einem Fluidauslass verbunden sind.

Nachfolgend ist die Erfindung anhand eines in den Zeichnungen dargestellten Ausführungsbeispiels näher erläutert. In den Zeichnungen zeigt, jeweils schematisch vereinfacht und in einer Schnittansicht:

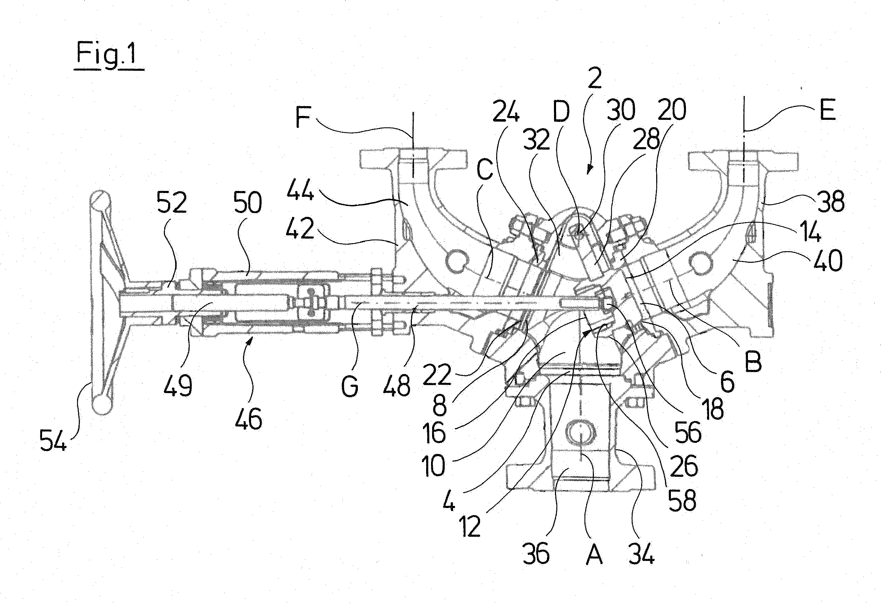

- Fig.1:: ein Wechselventil gemäß der Erfindung in einer ersten Schließstellung,

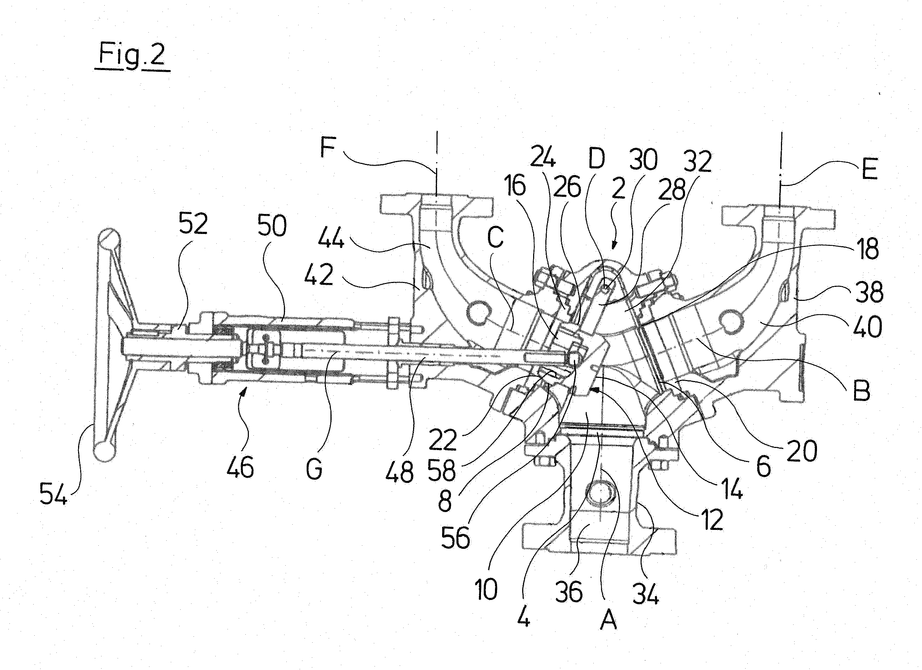

- Fig. 2:: das Wechselventil nach Fig. 1 in einer zweiten Schließstellung,

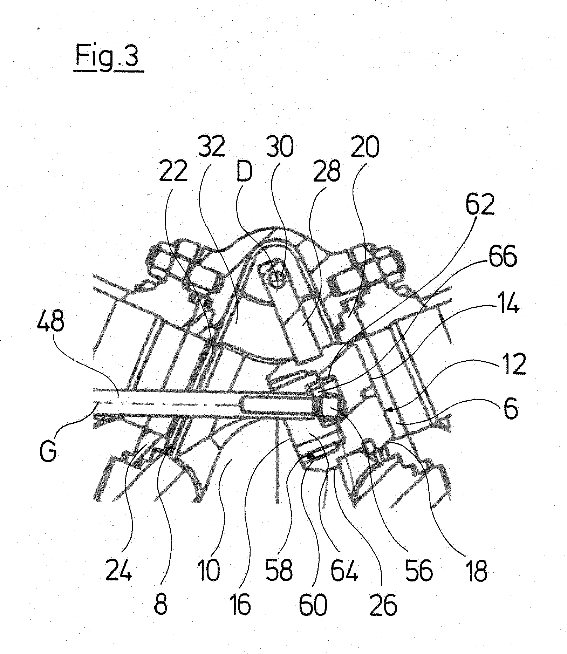

- Fig. 3:: einen vergrößert dargestellten Teilbereich aus Fig. 1,

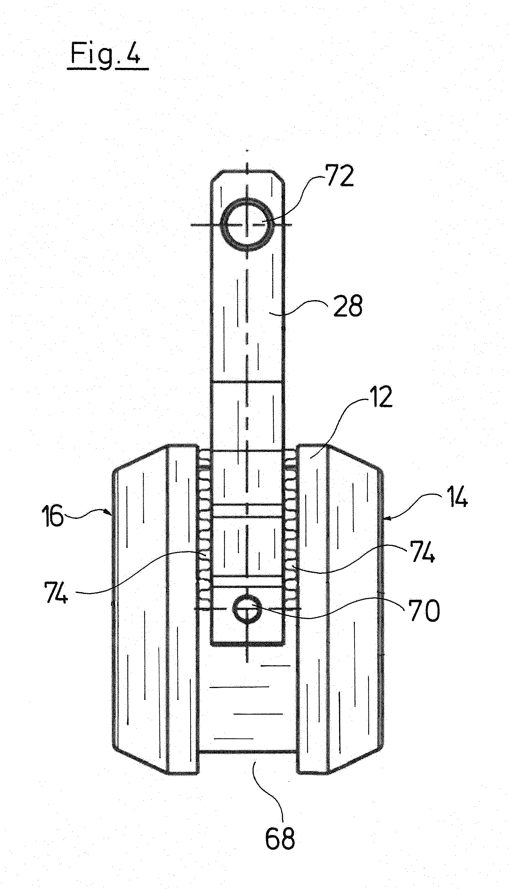

- Fig. 4:: eine Seitenansicht einer ersten Ausführungsform eines Absperrkörpers mit einem anschließenden Schwenkarm,

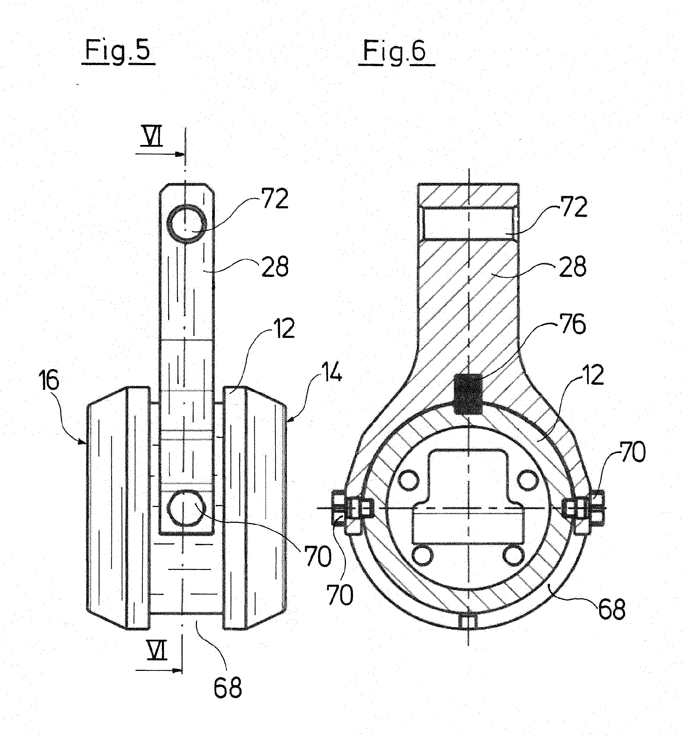

- Fig.5:: eine Seitenansicht einer zweiten Ausgestaltung des Absperrkörpers mit anschließendem Schwenkarm, und
- Fig. 6:: eine Schnittansicht der Anordnung in Figur 5 entlang der Linie VI-VI in Figur 5.

Das in den Fig. 1 und 2 dargestellte Wechselventil ist Teil einer Sicherheitsventilanordnung, mit welcher ein in einem fluidgefüllten Raum einer technischen Anlage herrschender Überdruck abgebaut werden soll. Das Wechselventil weist ein Ventilgehäuse 2 auf, an dem ein Fluideinlass 4 und zwei Fluidauslässe 6 und 8 angeordnet sind. Die Anordnung des Fluideinlasses 4 und der Fluidauslässe 6 und 8 an dem Ventilgehäuse 2 ist derart, dass eine Mittelachse A des Fluideinlasses 4 von der Mittelachse B des Fluidauslasses 6 sowie der Mittelachse C des Fluidauslasses 8 jeweils um einen Winkel von 112,5° versetzt ist, so dass der Winkel zwischen den Mittelachsen B und C der beiden Fluidauslässe 6 und 8 135° beträgt. Dabei liegen die Mittelachsen A, B und C in einer gemeinsamen Ebene. Der Versatz zwischen den Mittelachsen A, B und C kann jedoch auch anders gewählt werden. Dabei ist der Winkel zwischen der Mittelachse A des Fluideinlasses und den Mittelachsen B und C der Fluidauslässe 6, 8 vorzugsweise nicht kleiner als 90°. Bevorzugt liegen die Winkel zwischen den Mittelachsen A, B und C jeweils in einem Bereich zwischen 100° und 140°. Diese Anordnung hat den Vorteil, dass eine geringere Umlenkung der Strömung vom Fluideinlass zum Fluidauslass erfolgt, als wenn diese in einem Winkel von 90° zueinander angeordnet sind. Dadurch treten geringere Druckverluste auf.

In einem Innenraum 10 des Ventilgehäuses 2, durch welchen die Strömungspfade von dem Fluideinlass 4 zu den beiden Fluidauslässen 6 und 8 verlaufen, ist ein Absperrkörper 12 angeordnet, mit welchem wahlweise bzw. abwechselnd jeweils einer der Fluidauslässe 6 und 8 verschließbar ist. Zum Verschließen der Fluidauslässe 6 und 8 weist der Absperrkörper 12 an voneinander direkt abgewandten Seiten zwei, an ihrem Außenrand konisch angefaste Dichtflächen 14 und 16 auf, wobei die erste Dichtfläche 14 in einer ersten Schließstellung des Absperrkörpers 12, in welcher dieser den ersten Fluidauslass 6 verschließt, an einem ersten Ventilsitz 18 fluiddicht zur Anlage kommt, der an einer außenseitig des ersten Fluidauslasses 6 angeordneten und in das Ventilgehäuse 2 eingreifenden Ringhülse 20 ausgebildet ist (Fig. 1) und wobei die zweite Dichtfläche 16 in einer zweiten Schließstellung des Absperrkörpers 12, in welcher dieser den zweiten Fluidauslass 8 verschließt, an einem zweiten Ventilsitz 22 fluiddicht zur Anlage kommt, der an einer außenseitig des Fluidauslasses 8 angeordneten und in das Ventilgehäuse 2 eingreifenden Ringhülse 24 ausgebildet ist (Fig. 2).

Der Absperrkörper 12 ist in seine zwei Schließstellungen schwenkbar. Hierzu ist an einer die Dichtflächen 14 und 16 verbindenden Umfangswandung 26 des Absperrkörpers 12 ein Schwenkarm 28 angeordnet, welcher sich in Richtung normal zu der Umfangswandung 26 erstreckt. Der Schwenkarm 28 ist im Bereich seines von dem Absperrkörper 12 abgewandten Endes an einem Gelenkstift 30 angelenkt, welcher eine Schwenkachse D des Absperrkörpers 12 bildet. Der Gelenkstift 30 und somit auch die Schwenkachse D des Absperrkörpers 12 sind in dem Ventilgehäuse 2 auf der Mittelachse A des Fluideinlasses 4 liegend in einem Bereich 32 angeordnet, welcher außerhalb der Strömungspfade von dem Fluideinlass 4 zu den Fluidauslässen 6 und 8 gelegen ist. Die Schwenkachse D ist an einer dem Fluidauslass 4 abgewandten Seite im Inneren des Ventilgehäuses 2 gelegen. Die Ausrichtung des Gelenkstifts 30 und der Schwenkachse D ist hierbei normal zu der Mittelachse A des Fluideinlasses und normal zu einer von den Mittelachsen B und C der Fluidauslässe 6 und 8 aufgespannten Ebene.

An dem Ventilgehäuse 2 ist koaxial zu der Mittelachse A des Fluideinlasses 4 ein Anschlussstutzen 34 angeordnet. Der Anschlussstutzen 34 bildet einen Strömungspfad von einem in den Zeichnungen nicht dargestellten, mit einem Fluiddruck beaufschlagten Raum einer technischen Anlage zu dem Fluideinlass 4 des Ventilgehäuses 2, wobei sich ein den Strömungspfad bildendes Innenlumen 36 des Anschlussstutzens 34 von einem eingangsseitigen Querschnitt, welcher kleiner als der Querschnitt des Fluideinlasses 4 ist, kontinuierlich auf den Querschnitt des Fluideinlasses 4 vergrößert.

An den ersten Fluidauslass 6 schließt sich an dem Ventilgehäuse 2 ein Anschlussstutzen 38 an. Der Anschlussstutzen 38 weist ein Innenlumen 40 auf, dessen Querschnitt sich ausgehend von dem, dem Fluidauslass 6 zugewandten Ende des Anschlussstutzens 38, an welchem der Querschnitt des Innenlumens 40 mit dem Querschnitt des Fluidauslasses 6 korrespondiert, kontinuierlich verjüngt.

An den zweiten Fluidauslass 8 angrenzend ist an dem Ventilgehäuse 2 ein weiterer Anschlussstutzen 42 angeordnet. Auch bei diesem Anschlussstutzen 42 verjüngt sich der Querschnitt eines Innenlumens 44 ausgehend von dem, dem Fluidauslass 8 zugewandten Ende des Anschlussstutzens 42, an welchem der Querschnitt des Innenlumens 44 mit dem Querschnitt des Fluidauslasses 6 korrespondiert, kontinuierlich auf einen kleineren Querschnitt.

Sowohl der Anschlussstutzen 38 als auch der Anschlussstutzen 42 sind als Krümmer ausgebildet. Hierbei stimmt eine Mittelachse E des Innenlumens 40 des Anschlussstutzens 38 an dem Ende des Anschlussstutzens 38, welches dem ersten Fluidauslass 6 zugewandt ist, mit der Mittelachse B des Fluidauslasses 6 überein und verläuft an dem von dem Fluideinlass 6 abgewandten Ende des Anschlussstutzens 38 parallel zur Mittelachse A des Fluideinlasses. Eine Mittelachse F des Innenlumens 44 des Anschlussstutzens 42 stimmt an dem Ende des Anschlussstutzens 42, welches dem zweiten Fluidauslass 8 zugewandt ist, mit der Mittelachse C des Fluidauslasses 8 überein und verläuft an dem von dem Fluideinlass 8 abgewandten Ende des Anschlussstutzens 42 ebenfalls parallel zur Mittelachse A des Fluideinlasses. An den von dem Ventilgehäuse 2 abgewandten Enden der Anschlussstutzen 38 und 42 ist jeweils ein in den Zeichnungen ebenfalls nicht dargestelltes Sicherheitsventil angeordnet, mit denen wahlweise ein in dem an dem Anschlussstutzen 34 angeschlossenen Raum herrschender Überdruck abgebaut werden kann.

Zum Schwenken des Absperrkörpers 12 in seine beiden Schließstellungen ist das dargestellte Wechselventil mit einem Linearantrieb 46 ausgestattet. Bei dem Linearantrieb 46 handelt es sich um einen handbetätigten Spindeltrieb. Dieser Spindeltrieb weist eine Gewindespindel 49 auf, welche mit einer Betätigungsstange 48 gekoppelt ist, welche durch eine Außenwandung des Anschlussstutzens 42 und den Fluideinlass 8 in den Innenraum 10 des Ventilgehäuses 2 geführt ist, wo sie mit dem Absperrkörper 12 bewegungsgekoppelt ist. Die Betätigungsstange 48 definiert eine Bewegungsachse G des Linearantriebs 46. Die Ausrichtung der Betätigungsstange 48 bzw. die Ausrichtung der Bewegungsachse G sind derart, dass sie sich quer zu der von dem Gelenkstift 30 gebildeten Schwenkachse D erstrecken. Außenseitig des Anschlussstutzens 42 sind die Betätigungsstange 48 sowie die Gewindespindel 49 durch ein dort angeordnetes Gehäuse 50 geführt, wobei an einem von dem Ventilgehäuse 2 abgewandten Ende des Gehäuses 50 eine in das Gehäuse 50 eingreifende drehbare Spindelmutter 52 des Spindeltriebs angeordnet ist. Zur manuellen Betätigung des Spindeltriebs ist die Spindelmutter 52 drehfest mit einem Handrad 54 verbunden.

An ihrem in den Innenraum 10 des Ventilgehäuses 2 eingreifenden Ende ist die Betätigungsstange 48 gelenkig mit dem Absperrkörper 12 verbunden. Zur Bildung dieser Gelenkverbindung weist die Betätigungsstange 48 an ihrem in den Innenraum 10 des Ventilgehäuses 2 eingreifenden Ende einen Gelenkkopf 56 auf. Der Gelenkkopf 56 ist im Wesentlichen zylindrisch ausgebildet und weist einen Querschnitt auf, welcher größer als der Querschnitt einer Verbindung zu der Betätigungsstange 48 ist. Mit dem Gelenkkopf 56 greift die Betätigungsstange 48 in eine Ausnehmung 58 ein, welche an dem Absperrköper 12 an dessen Dichtfläche 16 mittig ausgebildet ist.

An der Ausnehmung 58 ist ein Absatz ausgebildet, welcher die Ausnehmung 58 in einen direkt an die Dichtfläche 16 angrenzenden Abschnitt 60 und einen sich an diesen Abschnitt in Richtung der Dichtfläche 14 anschließenden Abschnitt 62 unterteilt (Fig. 3). Die Abmessung des unmittelbar an die Dichtfläche 16 angrenzenden Abschnitts 60 ist hierbei in Richtung parallel zu der Dichtfläche 16 größer als die entsprechende Abmessung des der Dichtfläche 14 zugewandten Abschnitts 62, wobei letztgenannte Abmessung größer als der maximale Querschnitt des Gelenkkopfes 56 ist.

In den unmittelbar an die Dichtfläche 16 angrenzenden Abschnitt 60 der Ausnehmung 58 greift ein Einsatz 64 ein, durch welchen die Betätigungsstange 48 geführt ist. Der Einsatz 64 umgreift den Gelenkkopf 56 und hält diesen in der Ausnehmung 58. Eine Außenseite des Einsatzes 64 fluchtet hierbei mit der Dichtfläche 16 des Absperrkörpers 12. An einer von dieser Außenseite direkt abgewandten Außenseite des Einsatzes 64 ist eine Ausnehmung 66 ausgebildet, welche hinsichtlich ihrer Lage und Abmessungen mit dem der Dichtfläche 14 zugewandten Abschnitt 62 der Ausnehmung 58 im Wesentlichen korrespondiert. Dieser Abschnitt 62 der Ausnehmung 58 bildet zusammen mit der an dem Einsatz 64 ausgebildeten Ausnehmung 66 einen Aufnahmeraum für den an dem Ende der Betätigungsstange 48 angeordneten Gelenkkopf 56, welcher hierin in Richtung der Bewegungsachse G des Linearantriebs 46 formschlüssig festgelegt ist, hierbei aber eine Relativbewegung zwischen Betätigungsstange 48 und Gelenkkopf 56 und dem Absperrkörper 12 in Richtung quer zu der Schwenkachse D und quer zu der Bewegungsachse G des Linearantriebes 46 zulässt.

Wie anhand der Figuren 4-6 erläutert wird, ist der Absperrkörper 12 beweglich mit dem Schwenkarm 28 verbunden. Dazu ist der Schwenkarm 28 an seinem dem Absperrkörper 12 zugewandten Ende derart gabelförmig ausgestaltet, dass er den Absperrkörper über die Hälfte seines Umfanges umgreift. Dabei greift der Schwenkarm 28 in eine Ringnut 68, welche den Außenumfang des Absperrkörpers 12 umfänglich umgibt, ein. Auf der Durchmesserlinie des Absperrkörpers 12 ist der Schwenkarm 28 mit seinen Gabelenden über zwei diametral entgegengesetzt angeordnete Bolzen 70 gelenkig mit dem Absperrkörper 12 verbunden. Am entgegengesetzten Längsende weist der Schwenkarm 28 ein sich parallel zu den Längsachsen der Bolzen 70 erstreckendes Durchgangsloch 72 auf, durch welches sich die Schwenkachse D zur Lagerung des Schwenkarmes 28 erstreckt. Gemäß der ersten Ausführungsform nach Figur 4 sind an zwei Seiten des Schwenkarmes 28 in der Ringnut 68 Federelemente 74 in Form von wellenförmigen, sich um den halben Umfang der Ringnut 68 erstreckenden Federbändern angeordnet. Diese sorgen dafür, dass in der Ruhelage der Schwenkarm 28 in der Ringnut 68 zentriert wird, d. h. der Absperrkörper 12 in einer Mittellage bezüglich des Schwenkarmes 28 gehalten wird. Dadurch wird verhindert, dass der Absperrkörper 12 während des Umschaltvorganges zwischen den beiden Dichtstellungen durch sein Eigengewicht verkippt.

Die Figuren 5 und 6 zeigen eine Variante der Anlenkung des Schwenkarmes 28 an dem Absperrkörper 12. Im Unterschied zu der Lösung gemäß Figur 4 ist bei der Lösung gemäß Figuren 5 und 6 ein zentrales Federelement 76 vorgesehen. Dieses Federelement 76 kann beispielsweise eine Schraubenfeder sein. Das Federelement 76 greift mit einem Ende in eine Ausnehmung zentral im Schwenkarm 28 und am entgegengesetzten Ende in eine Ausnehmung am Umfang des Absperrkörpers 12, d. h. am Boden der Ringnut 68 ein. Auch dieses Federelement 76 dient dazu, in einer Ruhestellung, in welcher der Absperrkörper 12 nicht in einer der Dichtstellungen ist, den Absperrkörper 12 zentriert bzw. mittig zu dem Schwenkarm 28 zu halten.

### Bezugszeichenliste

- 2: Ventilgehäuse
- 4: Fluideinlass
- 6: Fluidauslass
- 8: Fluidauslass
- 10: Innenraum
- 12: Absperrkörper
- 14: Dichtfläche
- 16: Dichtfläche
- 18: Ventilsitz
- 20: Ringhülse
- 22: Ventilsitz
- 24: Ringhülse
- 26: Umfangswandung
- 28: Schwenkarm
- 30: Gelenkstift
- 32: Bereich
- 34: Anschlussstutzen
- 36: Innenlumen
- 38: Anschlussstutzen
- 40: Innenlumen
- 42: Anschlussstutzen
- 44: Innenlumen
- 46: Linearantrieb
- 48: Betätigungsstange
- 49: Gewindespindel
- 50: Gehäuse
- 52: Spindelmutter
- 54: Handrad
- 56: Gelenkkopf
- 58: Ausnehmung
- 60: Abschnitt
- 62: Abschnitt
- 64: Einsatz
- 66: Ausnehmung
- 68: Ringnut
- 70: Bolzen
- 72: Durchgangsloch
- 74, 76: Federelemente

- A: Mittelachse
- B: Mittelachse
- C: Mittelachse
- D: Schwenkachse
- E: Mittelachse
- F: Mittelachse
- G: Bewegungsachse

## Patentansprüche

1. Wechselventil für eine Sicherheitsventilanordnung mit einem Ventilgehäuse (2), welches einen Fluideinlass (4) und zwei Fluidauslässe (6, 8) aufweist, sowie mit einem in dem Ventilgehäuse (2) angeordneten beweglichen Absperrkörper (12), welcher zwischen zwei Schließstellungen bewegbar ist, in denen er jeweils einen der Fluidauslässe (6, 8) verschließt, wobei der Absperrkörper (12) zwei einander abgewandte Dichtflächen (14, 16) aufweist, wobei an jedem der Fluidauslässe (6, 8) in dem Ventilgehäuse (2) jeweils ein korrespondierender Ventilsitz (18, 22) ausgebildet ist, welche derart ausgebildet sind, dass jeweils eine der Dichtflächen (14, 16) in einer der Schließstellungen mit einem der Ventilsitze (18, 22) in dichter Anlage ist,
wobei der Absperrkörper (12) um eine außenseitig des Absperrkörpers (12) und außerhalb der Dichtflächen [14, 16) gelegene Schwenkachse (D) schwenkbar angeordnet ist und das Wechselventil einen Linearantrieb (46) aufweist, welcher an dem Absperrkörper (12) radial beabstandet zu dessen Schwenkachse (D) angreift und mit dem Absperrkörper (12) derart gekoppelt ist, dass der Absperrkörper (12) unmittelbar mit einem linear bewegbaren Teil des Linearantriebes (46) bewegungsgekoppelt ist und durch Bewegung des Linearantriebes (46) zwischen seinen Schließstellungen schwenkbar ist.

2. Wechselventil nach Anspruch 1, **dadurch gekennzeichnet, dass** der Linearantrieb (46) ein handbetätigter Linearantrieb und insbesondere ein handbetätigter Spindeltrieb ist.

3. Wechselventil nach Anspruch 1 oder 2, **dadurch gekennzeichnet, dass** eine Bewegungsachse (G) des Linearantriebes (46) sich quer zu der Schwenkachse (D) erstreckt.

4. Wechselventil nach einem der vorhergehenden Ansprüche, **dadurch gekennzeichnet, dass** die Dichtflächen und die Ventilsitze derart ausgebildet sind, dass zwischen der Dichtfläche und dem zugehörigen Ventilsitz eine rein metallische Dichtpaarung oder eine metallisch-weichdichtende Dichtpaarung gegeben ist.

5. Wechselventil nach einem der vorhergehenden Ansprüche, **dadurch gekennzeichnet, dass** der Linearantrieb (46) an einer der Dichtflächen (22), vorzugsweise in deren Zentrum, angreift.

6. Wechselventil nach einem der vorangehenden Ansprüche, **dadurch gekennzeichnet, dass** die Schwenkachse (D) des Absperrkörpers (12) in dem Wechselventil außerhalb der Strömungspfade von dem Fluideinlass (4) zu den Fluidauslässen (6, 8) angeordnet ist.

7. Wechselventil nach einem der vorangehenden Ansprüche, **dadurch gekennzeichnet, dass** der Absperrkörper (12) über einen außenseitig an dem Absperrkörper (12) angeordneten Schwenkarm (28) an der Schwenkachse (D) angelenkt ist.

8. Wechselventil nach Anspruch 7, **dadurch gekennzeichnet, dass** der Absperrkörper (12) mit dem Schwenkarm (28) beweglich, insbesondere gelenkig verbunden ist.

9. Wechselventil nach Anspruch 8, **dadurch gekennzeichnet, dass** zwischen dem Absperrkörper (12) und dem Schwenkarm (28) zumindest ein Federelement derart angeordnet ist, dass der Absperrkörper (12), wenn er sich nicht in einer der Schließstellungen befindet, in einer definierten Ruhelage gehalten wird.

10. Wechselventil nach einem der vorangehenden Ansprüche, **dadurch gekennzeichnet, dass** die Schwenkachse (D) durch eine im Inneren des Ventilgehäuses (2) gelegene gelenkige Anlenkung des Absperrkörpers (12) definiert ist.

11. Wechselventil nach einem der vorangehenden Ansprüche, **dadurch gekennzeichnet, dass** der Linearantrieb (46) durch eine Gelenkverbindung mit dem Absperrkörper (12) gekoppelt ist und dass die Gelenkverbindung vorzugsweise so ausgestaltet ist, dass sie eine Relativbewegung zwischen Linearantrieb (46) und Absperrkörper (12) in einer Richtung quer zu der Schwenkachse (D) und quer zu der Bewegungsachse (G) des Linearantriebes (46) zulässt.

12. Wechselventil nach Anspruch 11, **dadurch gekennzeichnet, dass**
die Gelenkverbindung einen an dem Linearantrieb (46) angeordneten Gelenkkopf (56) aufweist, welcher in einer Ausnehmung (58) in dem Absperrkörper (12) drehbeweglich und quer zu der Schwenkachse (D) linearbeweglich geführt ist, wobei vorzugsweise der Gelenkkopf (56) des Linearantriebes (46) durch einen Einsatz (64) in einer Ausnehmung (58) des Absperrkörpers (12) derart formschlüssig gehalten ist, dass eine Relativbewegung zwischen dem Absperrkörper (12) und dem Gelenkkopf (56) quer zur Bewegungsachse des Linearantriebes möglich ist.

13. Wechselventil nach einem der vorangehenden Ansprüche, **dadurch gekennzeichnet, dass** ein linear beweglicher Teil des Linearantriebs (46) durch einen der Fluidauslässe (8) geführt ist.

14. Sicherheitsventilanordnung, mit einem Wechselventil und zwei ausgangsseitig des Wechselventils angeordneten Sicherheitsventilen, **dadurch gekennzeichnet, dass** das Wechselventil ein Wechselventil gemäß einem der vorangehenden Ansprüche ist, bei welchem die zwei Sicherheitsventile jeweils mit einem Fluidauslass (6, 8) verbunden sind.

## Claims

1. A shuttle valve for a safety valve arrangement, with a valve housing (2) comprising a fluid inlet (4) and two fluid outlets (6, 8), as well as with a movable shut-off body (12) which is arranged in the valve housing (2) and which can be moved between two closure positions, in which it closes one of the fluid outlets (6, 8), wherein the shut-off body (12) comprises two sealing surfaces (14, 16) which are away from one another, wherein a corresponding valve seat (18, 22) is formed on each of the fluid outlets (6, 8) in the valve housing (2), said valve seats being designed in a manner such that in one of the closure positions, one of the sealing surfaces (14, 16) is in sealing contact with one of the valve seats (18, 22), wherein
the shut-off body (12) is arranged in pivotable manner about a pivot axis (D) which is situated at the outer side of the shut-off body (12) and outside the sealing surfaces (14, 16) and the shuttle valve comprises a linear drive (46) which engages on the shut-off body (12) in a manner radially distanced to its pivot axis (D) and is coupled to the shut-off body (12) in a manner such that the shut-off body (12) is coupled in movement in a direct manner to a linearly movable part of the linear drive (46) and is pivotable between its closure positions by way of moving the linear drive (46).

2. A shuttle valve according to claim 1, **characterised in that** the linear drive (46) is a hand-actuated linear drive and in particular a hand-actuated spindle drive.

3. A shuttle valve according to claim 1 or 2, **characterised in that** a movement axis (G) of the linear drive (46) extends transversely to the pivot axis (D).

4. A shuttle valve according to one of the preceding claims, **characterised in that** the sealing surfaces and the valve seats are designed in a manner such that a purely metallic sealing pairing or a metallic- soft-sealing sealing pairing is given between the sealing surface and the associated valve seat.

5. A shuttle valve according to one of the preceding claims, **characterised in that** the linear drive (46) engages on one of the sealing surfaces (22), preferably in its centre.

6. A shuttle valve according to one of the preceding claims, **characterised in that** the pivot axis (D) of the shut-off body (12) is arranged in the shuttle valve outside the flow paths from the fluid inlet (4) to the fluid outlets (6, 8).

7. A shuttle valve according to one of the preceding claims, **characterised in that** the shut-off body (12) is articulated on the pivot axis (D) via a pivot arm (28) which is arranged on the shut-off body (12) at the outer side.

8. A shuttle valve according to claim 7, **characterised in that** the shut-off body (12) is movably connected, in particularly articulately connected to the pivot arm (28).

9. A shuttle valve according to claim 8, **characterised in that** at least one spring element is arranged between the shut-off body (12) and the pivot arm (28) in a manner such that the shut-off body (12) is held in a defined idle position when it is not located in one of the closure positions.

10. A shuttle valve according to one of the preceding claims, **characterised in that** the pivot axis (D) is defined by an jointed articulation of the shut-off body (12) which is situated in the inside of the valve housing (2).

11. A shuttle valve according to one of the preceding claims, **characterised in that** the linear drive (46) is coupled to the shut-off body (12) by a joint connection and that the joint connection is preferably designed such that it permits a relative movement between the linear drive (46) and the shut-off body (12) in a direction transverse to the pivot axis (D) and transverse to the movement axis (G) of the linear drive (46).

12. A shuttle valve according to claim 11, **characterised in that** the joint connection comprises a joint head (56) which is arranged on the linear drive (46) and which in a recess (58) in the shut-off body (12) is guided in a rotationally movable manner and in a linearly movable manner transversely to the pivot axis (D), wherein preferably the joint head (56) of the linear drive (46) is positively held by an insert (64) in a recess (58) of the shut-off body (12) in a manner such that a relative movement between the shut-off body (12) and the joint head (56) is possible transverse to the movement axis of the linear drive.

13. A shuttle valve according to one of the preceding claims, **characterised in that** a linearly movable part of the linear drive (46) is led through one of the fluid outlets (8).

14. A safety valve arrangement, with a shuttle valve and two safety valves arranged at the outlet side of the shuttle valve, **characterised in that** the shuttle valve is a shuttle valve according to one of the preceding claims, concerning which the two safety valves are each connected to a fluid outlet (6, 8).

## Revendications

1. Sélecteur de circuit pour un système de soupape de sécurité avec un boîtier de soupape (2) qui comprend une entrée pour fluide (4) et deux sorties pour fluide (6, 8), ainsi qu'avec un corps de fermeture (12) mobile disposé dans le boîtier de soupape (2), lequel corps est adapté pour pouvoir être déplacé entre deux positions de fermeture dans lesquelles il ferme respectivement une des sorties pour fluide (6, 8), le corps de fermeture (12) comprenant deux surfaces d'étanchéité (14, 16) détournées l'une de l'autre, à chacune des sorties pour fluide (6, 8), un siège de soupape (18, 22) correspondant étant formé dans le corps de fermeture (12), lesdits sièges étant configurés de façon que, dans une position de fermeture respective, une surface respective des surfaces d'étanchéité (14, 16) étant en appui étanche sur un des sièges de soupape (18, 22),
le corps de fermeture (12) étant disposé de façon pivotante autour d'un axe de pivotement (D) situé à l'extérieur du corps de fermeture (12) et à l'extérieur des surfaces d'étanchéité (14, 16), et le sélecteur de circuit comprenant un entraînement linéaire (46) qui agit sur le corps de fermeture (12) à une distance radiale de l'axe de pivotement (D) et qui est relié au corps de fermeture (12) de façon telle que le corps de fermeture (12) soit relié en mouvement directement à une partie linéairement mobile de l'entraînement linéaire (46) et qu'il soit pivotable entre ses positions de fermeture par un mouvement de l'entraînement linéaire (46).

2. Sélecteur de circuit selon la revendication 1, **caractérisé en ce que** l'entraînement linéaire (46) est un entraînement linéaire actionné manuellement et en particulier un entraînement par mécanisme à vis actionné manuellement.

3. Sélecteur de circuit selon la revendication 1 ou 2, **caractérisé en ce qu'**un axe de mouvement (G) de l'entraînement linéaire (46) s'étend transversalement à l'axe de pivotement (D).

4. Sélecteur de circuit selon l'une des revendications précédentes, **caractérisé en ce que** les surfaces d'étanchéité et les sièges de soupapes sont formés de façon telle qu'il existe un assemblage d'étanchéité purement métallique ou un assemblage d'étanchéité métallique souple entre la surface d'étanchéité et le siège de soupape associé.

5. Sélecteur de circuit selon l'une des revendications précédentes, **caractérisé en ce que** l'entraînement linéaire (46) agit sur une des surfaces d'étanchéité (22), de préférence en son centre.

6. Sélecteur de circuit selon l'une des revendications précédentes, **caractérisé en ce que** l'axe de pivotement (D) du corps de fermeture (12) est disposé dans le sélecteur de circuit en dehors des chemins de flux de l'entrée pour fluide (4) à la sortie pour fluide (6,8).

7. Sélecteur de circuit selon l'une des revendications précédentes, **caractérisé en ce que** le corps de fermeture (12) est articulé à l'axe de pivotement (D) par un bras de pivotement (28) situé extérieurement sur le corps de fermeture (12).

8. Sélecteur de circuit selon la revendication 7, **caractérisé en ce que** le corps de fermeture (12) est relié au bras de pivotement (28) de manière mobile, en particulier de façon articulée.

9. Sélecteur de circuit selon la revendication 8, **caractérisé en ce qu'**au moins un élément de ressort est fixé entre le corps de fermeture (12) et le bras de pivotement (28) de manière telle que le corps de fermeture soit maintenu dans une position de repos définie lorsqu'il ne se trouve pas dans une des positions de fermeture.

10. Sélecteur de circuit selon l'une des revendications précédentes, **caractérisé en ce que** l'axe de pivotement (D) est défini par une liaison articulée du corps de fermeture (12) située à l'intérieur du boîtier de soupape (2).

11. Sélecteur de circuit selon l'une des revendications précédentes, **caractérisé en ce que** l'entraînement linéaire (46) est relié au corps de fermeture (12) par un assemblage articulé et que l'assemblage articulé est conçu de préférence de manière à ce qu'il permette un mouvement relatif entre l'entraînement linéaire (46) et le corps de fermeture (12) dans une direction transversalement à l'axe de pivotement (D) et transversalement à l'axe de mouvement (G) de l'entraînement linéaire (46).

12. Sélecteur de circuit selon la revendication 11, **caractérisé en ce que** l'assemblage articulé comprend une tête articulée (56) disposée sur l'entraînement linéaire (46) qui est supportée d'une manière pivotante dans un évidement (58) dans le corps de fermeture (12) et de manière linéairement mobile transversalement à l'axe de pivotement (D), de préférence la tête articulée (56) de l'entraînement linéaire (46) étant maintenue par complémentarité de forme par un insert (64) dans un évidement (58) du corps de fermeture (12) de manière telle qu'un mouvement relatif soit possible entre le corps de fermeture (12) et la tête articulée (56) transversalement à l'axe de mouvement de l'entraînement linéaire.

13. Sélecteur de circuit selon l'une des revendications précédentes, **caractérisé en ce qu'**une partie linéairement mobile de l'entraînement linéaire (46) passe par une des sorties de fluide (8).

14. Système de soupape de sécurité avec un sélecteur de circuit et deux soupapes de sécurité disposées du côté sortie du sélecteur de circuit, **caractérisé en ce que** le sélecteur de circuit est un sélecteur de circuit selon l'une des revendications précédentes dans lequel les deux soupapes de sécurité sont reliées chacune à une sortie pour fluide (6, 8) respective.
